# EUROPEAN PATENT APPLICATION

(11) **EP 1 308 362 A1**
(43) Date of publication of application: **07.05.2003**
(21) Application number: 02257293.7
(22) Date of filing: 22.10.2002
(51) Int. Cl.: B60T 17/22, B60R 16/02, G07C 5/08, B60T 15/04, B60Q 1/44

(54) **Handbrake condition indicator**

(30) Priority: 31.10.2001 GB 0126091
(71) Applicant: Horland Innovations Ltd., Banbury, Oxfordshire OX16 1YE (GB)
(72) Inventor: Horne, Michael James, Banbury, Oxfordshire, OX16 1YE (GB); Harland, Gregory Mark, Banbury, Oxfordshire, OX17 2LD (GB)
(74) Representative: Stanley, Michael Gordon

(57) **Abstract**

A method of warning a vehicle driver of a "handbrake-off" condition and an audible warning system for the same, the comprising a verbal warning means (23), a handbrake lever condition sensor (17), a vehicle door condition sensor (16), the verbal warning means (23) being operable to repeat a pre-recorded message when the vehicle door (15) is open and the handbrake lever (13) is in an off-condition.

## Description

### Field

This invention relates to handbrake condition indicators in particular for use on the prime movers of goods vehicles.

### Background of the Invention

Goods vehicles typically comprise a prime mover and a trailer unit. The goods vehicle may for example comprise an articulated truck having a tractor unit and trailer or a rigid truck unit with a draw bar trailer. A tractor unit may be usable with one or more trailer units so that in some locations such as warehouses, or depots, the trailer units may be left parked independently of the tractor unit. When a tractor unit is subsequently attached to a parked trailer, a driver reverses the tractor unit against the trailer causing the tractor and trailer to mechanically couple. The driver then leaves the tractor cab to interconnect the braking systems and electrical systems between the tractor and trailer, and raise or remove the trailer support legs.

The tractor air brake line has a coupling at its free end for connecting with a co-operating coupling of the trailer braking system. The tractor brake line contains a shut-off which automatically opens on connection to the trailer braking system. When the two systems are coupled together the trailer brakes are generally in a "brakes off" condition. If the driver has forgotten to apply the tractor unit handbrake and the coupled tractor-trailer unit is on an incline, it is possible for the coupled unit to run-away sometimes causing damage and in some circumstances injuring or killing the driver or other persons. Similar problems may occur with rigid truck and drawbar trailer combinations and with skip lorries when picking up and unloading rubbish skips.

Vehicles are conventionally provided with visual warning devices and buzzers that indicate to the driver that the handbrake is or is not applied. However these type of warnings can easily be ignored or confused with other in cab warning lights and sounds.

### Object of the present Invention

The present invention seeks to provide an improved handbrake condition warning device to a vehicle drive.

### Statements of Invention

According to a first aspect of the present invention there is provided an audible warning system for a vehicle handbraking system comprising a verbal warning means, a handbrake lever condition sensor, a vehicle door condition sensor, the warning means being operable to repeat a pre-recorded vocal message when the vehicle door is open and the handbrake lever is in an off-condition.

The term "handbrake lever" includes any hand operable lever, handle or other device which operates the vehicle braking system.

The pre-recorded vocal message may be any desired language. This is preferred to a buzz, beep or other noise since many other vehicle systems emit warning noises under various unfavourable conditions.

The system repeats the warning message for a predetermined period of time which may be determined by the number of times the message is repeated messages or alternatively the system may further comprise a timer which switches off the audible warning means after a predetermined time limit. The timer is preferably adjustable.

The handbrake condition sensor and door condition sensor are each connected to the solenoid of a respective first and second relay switch, the two relay switches being connected in series so that the first relay switch when closed operates the solenoid of the second relay to in turn operate the audible warning device when both are closed.

In an alternative system, the handbrake conditions sensor and door condition sensor are connected to a microprocessor which is pre-programmed to operate the verbal warning means. The verbal warning means preferably comprises a sound chip having a message programmed thereon and an audio circuit which operates a speaker. The output volume of the audio circuit is adjustably controlled by a control device located between the sound chip and audio circuit. The microprocessor may be connected to warning devices that indicate that the warning system is correctly connected to the braking system and/or is operating correctly.

Also according to the present invention there is provided a vehicle, preferably a tractor unit, having a braking system including a warning system according to the present invention. The door condition sensor may comprise a door operated switch e.g the cab light switch and the hand brake sensor may comprise the handbrake warning light switch.

Yet another aspect of the invention provides a method of warning a vehicle driver of a "handbrake off condition" in which an audible warning system, comprising a verbal warning means, a handbrake lever condition sensor and a vehicle door condition sensor, is activated to issue a verbal message when the vehicle door is open and the handbrake lever is in an off-condition. The message may be repeated for a predetermined elapsed time period.

### Description of Drawings

The invention will be described by way of example and with reference to the accompanying drawings in which:
- Fig. 1: is a schematic drawing of a truck tractor unit showing the braking system and warning system according to the present invention,
- Fig. 2: is a circuit diagram of the warning system used in Fig.1, and
- Fig. 3: is a circuit diagram for a second warning system utilising PCB technology.

### Detailed Description of the Invention

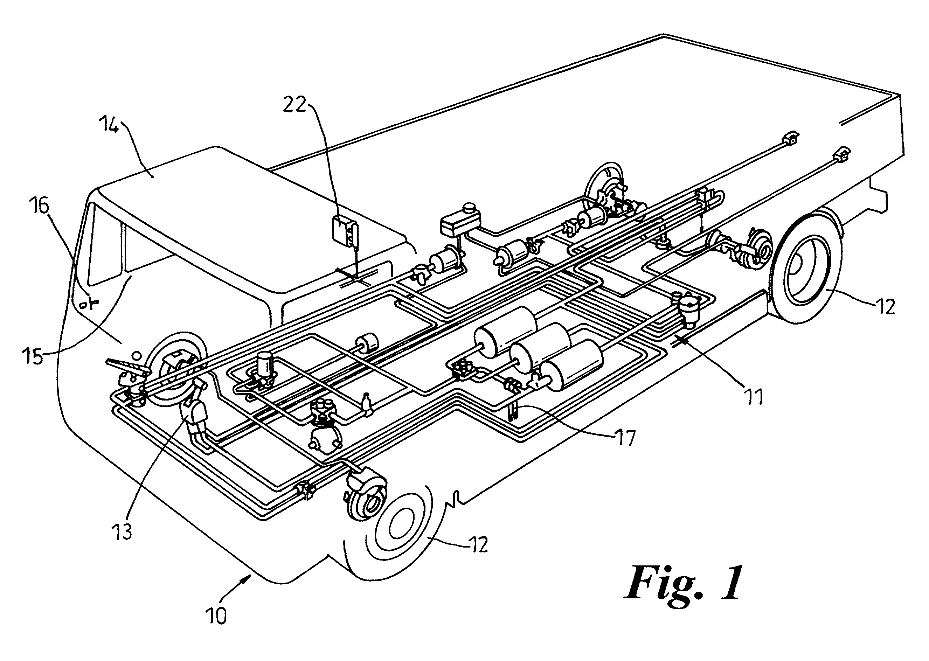

With reference to Fig.1, there is shown a tractor unit 10 of a tractor trailer combination having an air operated braking system 11 for the road wheels 12. The tractor unit driving cab 14 has a pair of doors 15, only one of which is shown, each of which is provided with a pin switch 16 in the door frame which typically operates an internal light for the cab as the door is opened. The pin switch 16 is conveniently utilised in the present invention as a door condition sensor, although a separate door condition sensor could be used if desired.

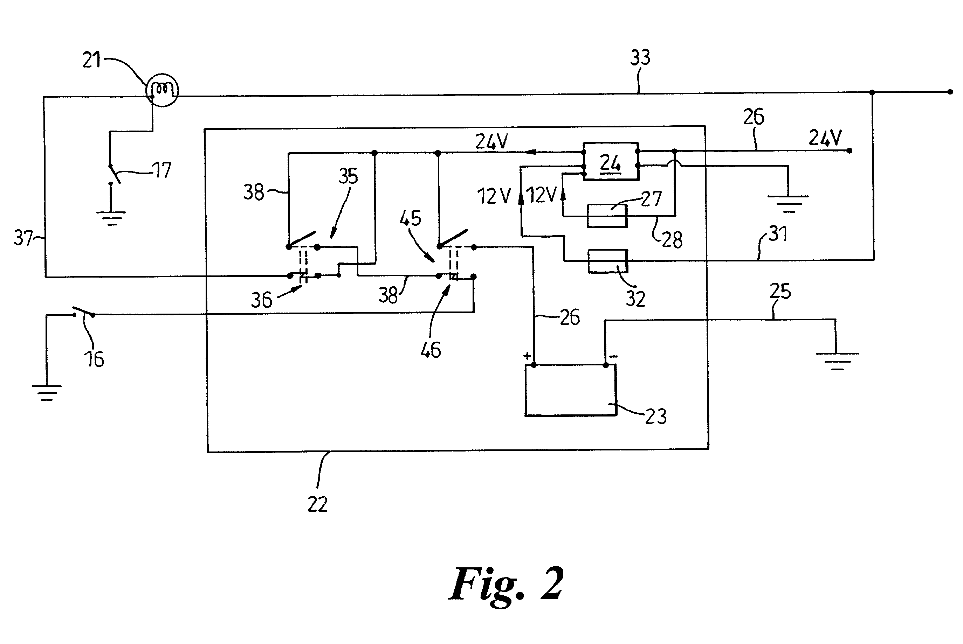

The braking system 11 has a hand operable lever 13 located within the cab 14 and the operation of the handbrake is sensed by a handbrake switch 17 located in the brake lines. The switch conventionally operates a warning light 21 (see Fig.2) in the cab 14. The handbrake switch 17 is conveniently used in the present invention as a handbrake condition sensor, although a separate handbrake condition sensor could be used if desired.

The cab 14 also houses a handbrake "off" warning unit 22 which in use provides a vocal message warning that the handbrake is in an "off" condition.

Now with reference to Fig.2, a handbrake warning system comprises the audible warning unit 22 which has a DC voltage operated audible warning means 23 having a power feed line 26 and is connected to ground through a groundline 25. The warning means 23 is supplied with a 24DC voltage which passes through a timer 24 and a change-over relay switch 45 which in turn is operated by a another change-over relay switch 35.

The timer 24 operates to allow the DC supply to pass only for a predetermined time period. The timer 24 may be adjustable for setting different time periods. The timer 24 operates using 12V DC supply and is connected to the power feed line 26 via a line 28 and a resistor 27 which reduces the 24V supply to 12V. The timer 24 is also connected via line 31 and resistor 32 line to a 24V power supply line 33 which is live only when the vehicle ignition switch is activated. The resistor 32 again reduces the 24V supply to 12V for the timer. The timer 24 senses via the line 31 when the ignition is switched off and is thereby triggered to allow the 24V supply to the warning means 23 to continue for only a predetermined period. A 24V operable timer may be used if available.

The handbrake warning light 21 is also supplied via an ignition switch activated line, conveniently the same line 33, and is connected to ground via the switch 17. The change-over relay switch 35 has its solenoid 36 connected to the timed power supply line 26 and to ground via ground line 37 and the handbrake switch 17.

The relay switch 35 is also located in the power supply line 38 to the solenoid 46 of the second change-over relay 45. The solenoid 46 is connected to ground via the door pin switch 16. The change over relay switch 45 is located in the power supply line 26 to the warning means 23. The change-over relay 35 is operable so that its switch is closed when no power passes through its solenoid 36 and the relay 45 is operable so that its switch is closed when power is supplied to its solenoid 46.

The warning means 23 is operable when the tractor cab door is opened and the handbrake lever 13 has not been operated to apply the brakes. Since the lever 13 is in an "off" condition the switch 17 is open and the relay 35 is closed.

This allows power supply across the relay 35 to the solenoid 46. Since the cab door 15 is open and the pin switch 16 is closed power flows through the solenoid 46 causing the relay switch 45 to close. The power supply can now flow through line 26 to operate the warning means.

The time 24 will be activated if the ignition is switch off and the power supply to the warning means 23 will be cut after a predetermined time period.

If the cab door 15 is closed, the relay 45 remains open and the warning means is inoperable.

If the handbrake lever is in an "on" condition then power flows through solenoid 36 and the relay switch 35 is open preventing activation of the solenoid 46 of the relay 45.

The warning means 23 may produce any vocal message to warn the driver however a short snappy pre-recorded vocal message is preferred, for example "Check Handbrake" or "Handbrake Off".

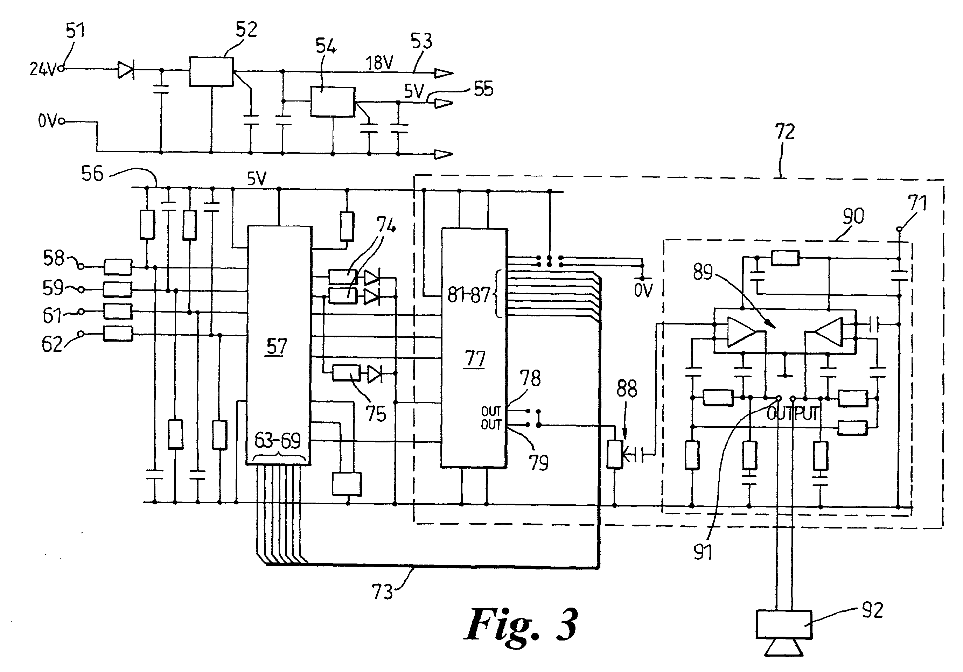

With reference to Fig.3, there is shown a circuit diagram for a second hand brake warning system which is formed on a printed circuit board. The circuit receives a 24v supply on feed line 51 which passes through a first voltage regulator 52 to provide an 18V supply on line 53 and second voltage regulator 54 to provide a 5V supply on line 55. The 18V supply line 53 is connected to the 18v input 71 of an audio system 72 and the line 55 is connected to a 5v supply line 56 for a microprocessor 57.

The microprocessor 57 receives handbrake on/off signals via the terminals 58,59 respectively which are connected to a hand break warning switch 17 (see Fig.1) connected into an air line. The microprocessor 57 also receives driver's door open/closed signals via terminals 61,62, and is pre-programmed to operate the audio system 72 when the hand brake is in an "off condition" and the driver's door is open. The processor is programmed to cause the audio system to repeat the verbal message a desired number of times. The microprocessor 57 has output ports connected to the audio system 72, including the ports 63-69 which are connected through a multi-core cable 73, and further outputs which are connected to a dual colour LED warning devices 74 which indicate when the warning system is correctly connected and is in operation. Another LED 75 may be optionally connected in parallel with the dual colour LED 74 to provide a remote warning device.

The audio system 72 has a sound chip 77 with inputs connected to the microprocessor 57.

Inputs 81-87 connected via cable 73 locate the verbal message on the sound chip 77. The chip 77 has outputs 78 79 connected to a volume control 88 in turn connected to an amplifier 89 of an audio circuit 90 having outputs 91 connectable to a speaker 92.

## Claims

1. An audible warning system for a vehicle handbrake comprising an audible warning means, a handbrake lever condition sensor, and a vehicle door condition sensor, **characterised in that** the audible warning means (23) is a verbal warning means(23) being operable to repeat a pre-recorded message when the vehicle door (15) is open and the handbrake lever (13) is in an off-condition.

2. A warning system as claimed in Claim 1 **characterised in that** the system repeats the message for a predetermined period of time.

3. A warning system as claimed in Claim 2 **characterised in that** a timer (24) switches off the verbal warning means (23) after a predetermined elapsed time period.

4. A warning system as Claimed in Claim 3 **characterised in that** the timer (24) is adjustable to switch off after different desired elapsed time periods.

5. A system as claimed in Claim 4 **characterised in that** the timer is activated by switching off the vehicle ignition.

6. A warning system as claimed in any one of Claims 1 to 5 **characterised in that** the handbrake condition sensor(17) and door condition sensor (16) are each connected to the solenoid( 36 & 46 resepctively) of a respective first and second relay switch (35 & 45), the two relay switches (35 & 45) being connected in series so that the first relay switch (35) when closed operates the solenoid (46) of the second relay switch (45) to close the second switch and in turn operate the audible warning device (23) when both are closed.

7. A warning device as claimed in Claim 1 or Claim 2 wherein the handbrake conditions sensor (17) and door condition sensor (16) are connected to a microprocessor (57) which is pre-programmed to operate the verbal warning means (72).

8. A warning device as claimed in Claim 7 wherein the verbal warning means (72) comprises a sound chip (77) having a message programmed thereon and an audio circuit (90) which operates a speaker (92).

9. A vehicle having a braking system with a hand brake (13), and further comprising a warning system as claimed in any one of Claims 1 to 8.

10. A method of warning a vehicle driver of a "handbrake off condition" in which an audible warning system; comprising an audible warning means, a handbrake lever condition sensor is activated to issue an audible warning message when the vehicle door is open and the handbrake lever is in an off-condition, **characterised in that** the audible warning system issues a repeat verbal message.
